# FASCICULE DE BREVET EUROPEEN

(11) **EP 0 506 495 B1**
(45) Date de publication et mention de la délivrance du brevet: **11.12.1996**
(21) Numéro de dépôt: 92400205.8
(22) Date de dépôt: 27.01.1992
(51) Int. Cl.: C08G 69/44, C08G 69/40

(54) **Polyether bloc amides, leur procédé de synthèse**
Polyether-amid Blockpolymeren und Verfahren zur Herstellung
Polyether-amide block polymers and process for their preparation

(30) Priorité: 30.01.1991 FR 9101032
(43) Date de publication de la demande: 30.09.1992
(73) Titulaire: ELF ATOCHEM S.A., 92800 Puteaux (FR)
(72) Inventeur: Maj, Philippe, F-27230 Thiberville (FR); Cuzin, Daniel, F-78750 Mareil Marly - Yvelines (FR)

(56) Documents cités:
- EP-A- 0 025 487
- EP-A- 0 025 828
- FR-A- 2 273 021
- FR-A- 2 378 058
- FR-A- 2 401 947
- FR-A- 2 470 141
- FR-A- 2 555 186
- GB-A- 2 087 912
- PATENT ABSTRACTS OF JAPAN vol. 12, no. 263 (C-514)22 Juin 1988 & JP-A-63 048 332 (ASAHI CHEM.) 1 Mars 1988
- PATENT ABSTRACTS OF JAPAN vol. 12, no. 462 (C-549)5 Décembre 1988 & JP-A-63 182 343 (ASAHI CHEM.)

## Description

La présente invention concerne des polymères séquencés comprenant des séquences polyéther et des séquences oligoamides qui sont appelés également polyéther bloc amides.

Dans la littérature, on trouve de nombreuses références concernant les polyéther bloc amides.

Dans les brevets FR 2.273.021 et FR 2.401.947 au nom de la demanderesse sont décrits des polyétheramides de formule 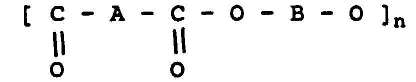 dans laquelle A représente une séquence polyamide, B une séquence polyéther aliphatique.

Ils sont obtenus par réaction à l'état fondu d'un polyamide dicarboxylique de Mn compris entre 300 et 15000 et un polyétherdiol de Mn compris entre 200 et 6000 sous vide poussé à des températures comprises entre 100 et 400°C en présence d'un ou plusieurs tétraalcoxydes métalliques de formule M(OR)₄ comme catalyseur où M représente le titane, le hafnium ou le zirconium et R un radical hydrocarboné ayant de 1 à 24 atomes de carbone.

Ces polyéther bloc amides présentent de bonnes propriétés mécaniques et chimiques.

Dans le brevet FR 2.384.810, on a décrit des polyéther ester amides, obtenus par polymérisation sous pression autogène à des températures comprises entre 230 et 300°C d'un mélange constitué
- d'un ou plusieurs monomères de polyamide
- d'un alpha, omega - dihydroxy (polytétrahydrofurane) ou PTMG de Mn compris entre 160 et 3000
- et d'au moins un diacide en présence d'eau, l'eau est ensuite éliminée du milieu réactionnel qui est ensuite ramené à pression normale ou réduite à une température comprise entre 250 et 280°C.

Les produits obtenus sont également des polymères séquencés ou blocs et présentent une bonne résistance au choc à froid.

Toutefois les polymères obtenus selon ces brevets ont,pour une même dureté, une température de fusion plus faible que ceux conformes à l'invention.

Le brevet US 4.307.227 décrit des adhésifs de type hot-melt constitués de 50 à 80 % d'unités de récurrence dérivées de caprolactame et de mélanges d'acides dicarboxyliques d'amines primaires et de polyoxyalkylène glycol.

Le procédé mis en oeuvre (réaction de l'ensemble des constituants sans catalyseur entre 220° et 250°C ) ne permet pas de synthétiser des produits dont les séquences polyéther ont une Mn supérieure à 1000.

Les demandes de brevet J63-035622 et J63-277239 concernent des polyéther bloc amides obtenus par réaction entre un oligoamide de PA-6,6 contenant une ou plusieurs séquences de polyoxyalkylène dioxy et un polyoxyalkylène glycol ou un diol de faible masse sous vide poussé à une température supérieure à 250°C en présence d'un catalyseur d'estérification qui est un tétraalcoxyde métallique.

De l'utilisation de polyoxyalkylène glycol ou de diol de faible masse, résultent des produits présentant des points de fusion nettement moins élevés que ceux des produits de la présente invention.

La demande de brevet J63-182343 concerne des polyéther bloc amides obtenus par réaction à l'état fondu de séquences PA-6,6 à extrémités diamines et de polyéther à extrémités de chaîne dicarboxyliques. Les polymères obtenus selon cette demande présentent une température de fusion élevée, supérieure à 230 °C, ce qui nécessite des températures de transformation élevées, et donc des risques de dégradation des produits lors de leur transformation.

Les polyéther bloc amides selon l'invention sont des élastomères thermoplastiques dont les enchaînements les plus probables des différents blocs peuvent être représentés par la formule générale suivante : 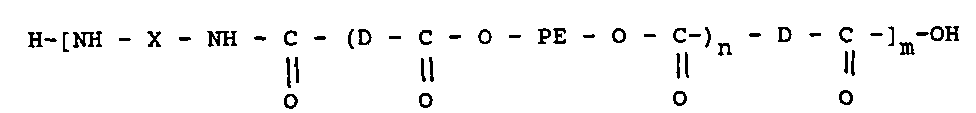 dans laquelle
. D représente le reste d'un oligamide diacide de Mn compris entre 300 et 3000 et de préférence entre 500 et 2000 et/ou le reste du limitateur diacide,
. PE représente le reste d'un polyétherdiol de Mn compris entre 200 et 5000 et de préférence entre 200 et 3000,
. X représente une chaîne hydrocarbonée, (cyclo) aliphatique, aromatique, linéaire ou ramifiée contenant de 4 à 20 atomes de carbone et de préférence de 6 à 15 atomes de carbone,
. n est compris entre 1 et 4 et de préférence proche de 1,
. m est en moyenne compris entre 2 et 50 et de préférence entre 5 et 20,
étant entendu que les polyéther bloc amides conformes à l'invention peuvent être constitués de blocs D, PE de nature différente. A titre d'exemple, on peut citer les polyéther bloc amides dont les blocs d'oligoamide sont constitués d'oligomères de PA-6 d'une part, et de PA-12 d'autre part.

Les oligoamides diacides utilisés peuvent être obtenus par polymérisation de lactames et/ou d'aminoacides, et éventuellement jusqu'à 50 % en poids d'un ou plusieurs diacides et d'une ou plusieurs diamines et/ou leurs sels en présence d'un limitateur de chaîne diacide.

Les oligamides préférés sont ceux qui dérivent de caprolactame et/ou de dodécalactame.

Parmi les limitateurs de chaîne diacide, on citera tout particulièrement les acides adipique et téréphtalique et de préférence l'acide dodécanedioïque.

A titre d'exemple de polyétherdiols, on peut citer le polyéthylène glycol (PEG), le polypropylène glycol (PPG), le polytétraméthylène glycol (PTMG), ainsi que les mélanges d'au moins deux des polyétherdiols précédents, le PEG et le PTMG seuls étant particulièrement préférés par la demanderesse.

A titre d'exemple de copolyétherdiols, on peut citer les copolymères statistiques et/ou séquencés d'éthylène glycol et/ou de propylène glycol et/ou de butylène glycol.

La viscosité inhérente des polyéther bloc amides selon l'invention est en général comprise entre 0,6 et 2,5 dl/g, de préférence entre 0,8 et 2,et avantageusement entre 1 et 1,8. Elle est mesurée à 20 °C dans le m-crésol avec une concentration initiale de 0,5 g de polymère pour 100 g de m-crésol.

Leur masse moléculaire moyenne en nombre est en général comprise entre 10 000 et 50 000 et de préférence entre 15 000 et 30 000.

Les polyéther bloc amides selon l'invention peuvent être préparés en deux étapes.

On réalise des produits multiséquencés diacides de formule: 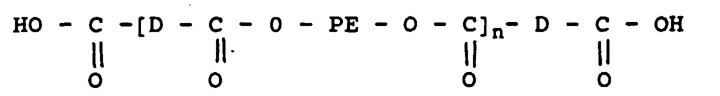 par polycondensation d'oligoamides diacides et de polyétherdiols ou à partir des monomères d'oligoamides, du limitateur de chaîne diacide et de polyétherdiols, la synthèse de ces produits multiséquencés pouvant être mise en oeuvre selon tout procédé de polycondensation connu tel que polycondensation en solution, interfaciale et de préférence la polycondensation à l'état fondu. pour une mole de polyétherdiol, on utilise en général (n + 1) moles d'oligoamide diacide ou de limitateur de chaîne de l'oligoamide diacide avec n tel que défini précédemment.

La polycondensation à l'état fondu s'effectue en général à une température comprise entre 230 et 280°C sous pression atmosphérique ou d'abord sous pression de vapeur d'eau puis après une détente, sous pression atmosphérique.

Les polyéther bloc amides selon l'invention sont ensuite synthétisés par réaction à l'état fondu des produits multi-séquencés décrits ci-dessus et de diamines de formule

NH₂ - X - NH₂.

Parmi les diamines préférées, on peut citer la m-xylène diamine, le bis ( amino-4 cyclohexyl ) méthane, l'hexaméthylène diamine et plus particulièrement la dodécaméthylène diamine. On utilise avantageusement de 0,8 à 1,3 mole de diamine et de préférence de 0,9 à 1,15 mole par mole d'oligoamide diacide.

On peut utiliser, pour les deux étapes, ci-dessus des catalyseurs d'estérification et respectivement d'amidification qui peuvent être ajoutés dès le début et/ou en cours de synthèse.

A titre d'exemple de catalyseur d'estérification, on peut citer l'acétate de zinc et à titre d'exemple de catalyseur d'amidification, on peut citer l'acide phosphoreux H₃PO₂.

Ces étapes peuvent aussi être réalisées sous pression réduite.

Les polyéther bloc amides selon l'invention peuvent être mis en oeuvre tels quels et conviennent pour la réalisation d'objets moulés, extrudés, de films, de gaines, de matériaux composites tels que films multi-couches. Ils peuvent également être mélangés avec d'autres polymères et en particulier avec des polyamides.

Certains polyéther bloc amides selon l'invention présentent des propriétés particulières.

A titre d'exemple, on peut citer les polyéther bloc amides dont les séquences polyéthers sont majoritairement constituées de PEG qui présentent d'excellentes propriétés d'antistatisme et de perméabilité aux gaz, seuls ou en mélange avec d'autres polymères tels que résine ABS, polycarbonate, polyphénylène éther, polyamide.

Parmi les polyéther bloc amides antistatiques, on préfère ceux dont les séquences oligoamide dérivent de PA-6. Parmi les polyéther bloc amides perméables aux gaz, on préfère ceux dont les séquences oligoamide dérivent de PA-12.

Les exemples suivants illustrent l'invention sans la limiter.

Dans tout le texte, Mn correspond à la masse moléculaire moyenne en nombre. La dureté Shore D(5 s) est mesurée conformément à la norme ISO R 868.

### Synthèse de triséquencés

### Exemple 1

Dans un autoclave en acier inoxydable de 4 l muni d'une agitation à ancre, on place 350 g de PTMG diol de Mn 2000 et 360 g d'oligoamide diacide de PA-12 de Mn 1028 limité acide adipique de température de fusion 148°C.

Après 4 purges sous 5 bars d'azote, le contenu du réacteur est placé sous faible courant d'azote à pression atmosphérique et chauffé à 260°C en 100 mn. La réaction a lieu dans ces conditions durant 120 mn et on récupère un produit contenant 0,49 meq/g de fonction acides résiduelles, ce qui correspond à un produit de Mn 4080 et de température de fusion égale à 153°C.

### Exemple 2

On effectue dans les mêmes conditions que pour l'exemple 1 la réaction à 260°C sous courant d'azote de 604 g de PTMG diol de Mn 2000 et 613 g d'oligoamide diacide de PA-12 de Mn 1015 limité acide dodécanedioïque de température de fusion 147°C. Après 100 mn de chauffage jusqu'à 260°C, on obtient en 65 mn de réaction à cette température un triséquencé contenant 0,49 meq/g de fonctions acides résiduelles,ce qui correspond à un produit de Mn 4080 et de température de fusion 155°C.

### Exemple 3

Dans les mêmes conditions que l'exemple 1, on fait réagir 350 g de PTMG diol de Mn 2000 et 327 g d'oligoamide diacide de PA-12 de Mn 933 limité acide téréphtalique et de température de fusion égale à 155°C. Après 50 mn de chauffage jusqu'à 260°C et 150 mn de réaction à cette température sous courant d'azote, on obtient un produit contenant 0,54 meq/q de fonctions acides résiduelles,ce qui correspond à un produit de Mn 3700 et de température de fusion 147° C.

### Exemple 4

Dans les mêmes conditions que l'exemple 1, on fait réagir 200g de PTMG diol de Mn 2000 et 400 g d'oligoamide diacide de PA-12 de Mn 2000 et de température de fusion égale à 160°C.

Après 45 mn de chauffage jusqu'à 260°C et 300 mn de réaction à cette température, on obtient un triséquencé contenant 0,335 meq/g de fonctions acides résiduelles, ce qui correspond à un produit de Mn 5970 (Mn visée 6000) et de température de fusion 169°C.

### Synthèse de polyéther bloc amides selon l'invention

### Exemple 5

Dans un réacteur en verre de volume utile 100 cm³, muni d'un agitateur à ancre en verre, d'une tubulure pour l'admission d'azote et d'un réfrigérant, on place 30 g du triséquencé diacide obtenu dans l'exemple 1 et 1,53 g de dodécaméthylène diamine, ce qui correspond à 1,04 mole de diamine par mole de triséquencé diacide.

Après avoir purgé le réacteur à l'azote, il est plongé dans un bain d'huile à 220°C. Quand le mélange des réactifs est fondu, l'agitation est mise en route et on élève la température à 260°C en 40 mn. On poursuit la réaction 3 h à cette température, puis le mélange réactionnel est progressivement placé sous vide jusqu'à une pression résiduelle d'environ 13,3 Pa. Après 2 h dans ces conditions, on remet progressivement le mélange réactionnel à pression atmosphérique par injection d'azote, puis arrête l'agitation et le chauffage en sortant le réacteur du bain thermostatique. Après refroidissement, on obtient un élastomère thermoplastique de viscosité inhérente 0,84 dl/g et de température de fusion 153°C.

### Exemple 6

Suivant les conditions décrites dans l'exemple 5, on fait réagir 30 g du triséquencé diacide obtenu dans l'exemple 2 et 1,55 g de dodécaméthylène diamine.

Après 15 mn de réaction à 220°C, 30 mn à 240°C, 50 mn à 260°C sous courant d'azote à pression atmosphérique et finalement 3 h30 sous pression réduite d'environ 26,6 Pa, on obtient un élastomère thermoplastique de point de fusion 158° C et de viscosité inhérente 0,78 dl/g.

### Exemple 7

Suivant les conditions décrites dans l'exemple 5, on fait réagir 20 g du triséquencé de l'exemple 3 et 1 g de dodécaméthylène diamine. Le réacteur est placé sous pression réduite d'environ 133 Pa puis porté à 200°C en 5 mn. L'agitation est mise en marche et le mélange réactionnel, toujours sous pression réduite, est porté à 260°C en 15 mn en réduisant la pression jusqu'à environ 13,3 Pa.

Après 60 mn de réaction dans ces conditions, on recueille un élastomère thermoplastique de point de fusion 163°C et de viscosité inhérente 0,6 dl/g.

### Exemple 8

Suivant les conditions décrites dans l'exemple 5, on fait réagir 30 g du triséquencé de l'exemple 1, 1,5 g de dodécaméthylène diamine et 6 µl d'une solution aqueuse à 50 % d'acide hypophosphoreux. Le milieu réactionnel maintenu sous courant d'azote est porté à 220°C en 5 mn, maintenu 10 mn à cette température puis porté à 240°C en 7 mn et maintenu 63 mn à cette température.

Le milieu réactionnel est finalement porté à 260°C en 7 mn et maintenu 3 h à cette température. On obtient ainsi un élastomère thermoplastique de viscosité inhérente 1 dl/g et de température de fusion 156°C.

### Exemple 9

De manière similaire à l'exemple 5, on fait réagir 30 g du triséquencé de l'exemple 1, 1,5 g de dodécaméthylène diamine et 0,06 ml d'une solution aqueuse à 50 % d'acide hypophosphoreux. Après 105 mn de réaction à 260°C sous balayage d'azote à pression atmosphérique, on obtient un élastomère thermoplastique de viscosité inhérente 1,15 dl/g et de point de fusion 154°C.

### Exemple 10

De manière similaire à l'exemple 9, on fait réagir 34,2 g du triséquencé de l'exemple 1, 1,73 g de dodécaméthylène diamine, et 0,6 ml d'une solution aqueuse à 50 % d'acide hypophosphoreux.

Le milieu réactionnel est chauffé sous courant d'azote à pression atmosphérique en 3 mn jusqu'à 240°C, maintenu 10 mn à cette température puis porté en 8 mn à 260°C. Après 38 mn à cette température, on obtient un élastomère thermoplastique de viscosité inhérente 1,08 dl/g et de point de fusion 146°C.

### Exemple 11 (COMPARATIF)

Selon le mode opératoire décrit dans la demande J63-035621, on place dans un réacteur en verre de 100 cm³ semblable à celui de l'exemple 5, 30 g du triséquencé de l'exemple 1 et 7,1 g de PTMG de Mn 1000. Après avoir purgé le réacteur à l'azote, on le plonge dans un bain d'huile maintenu à 260°C. Quand le mélange des réactifs est fondu, l'agitation est mise en route. Après 2 h de réaction sous courant d'azote à pression atmosphérique, la pression est réduite en 30 mn jusqu'à 13,3 Pa. Après 10 mn, on ajoute 0,1 g de Zr(OBu)₄ qui induit une réaction violente. On stoppe l'agitation après 20 mn et ramène le milieu réactionnel à pression atmosphérique par une circulation d'azote, puis on sort le tube du bain d'huile et on le laisse refroidir à température ambiante. On obtient un élastomère thermoplastique de température de fusion 142 °C et de viscosité inhérente 1,53 dl/g .

### Exemple 12 (COMPARATIF)

De manière similaire à l'exemple 11, on fait réagir 20 g du triséquencé de l'exemple 1 et 0,85 g de 1,10-décane diol à 260°C. Après 1 h à cette température sous courant d'azote à pression atmosphérique, la pression est réduite à 13,3 Pa en 40 mn. Après 100 mn de réaction à cette température, on ajoute 0,3 g de Zr(OBu)₄ et maintient le mélange à cette pression pendant 90 mn . On obtient un élastomère thermoplastique de viscosité inhérente 1,14 dl/g, et de point de fusion 149°C .

### Exemple 13

Dans un autoclave en acier inoxydable de 880 l muni d'une agitation à turbine et préalablement purgé à l'azote, on fait réagir 95 kg de lauryllactame et 28,4 kg d'acide dodécanedioïque à 290°C pendant 2 h sous pression autogène . Après remise à pression atmosphérique, on introduit 123,6 kg de PTMG de Mn 2000 et fait réagir le mélange 3 h à 240°C sous courant d'azote à pression atmosphérique . Après homogénéisation sous pression autogène avec 7,2 kg d'hexaméthylène diamine pendant 1 h à 240°C le mélange réactionnel est remis à pression atmosphérique et placé dans un réacteur en acier inoxydable de 880 l muni d'une agitation à ancre. Après introduction de 240 g d'une solution aqueuse d'acide phosphorique à 84 %, le milieu est placé sous pression réduite de 5,3.10³ Pa et on obtient après 6 h de polycondensation dans ces conditions un élastomère thermoplastique de point de fusion 150°C, de viscosité inhérente 1,12 dl/g et de dureté Shore D 28,9.

### Exemple 14 (COMPARATIF)

Selon le mode opératoire décrit dans le brevet FR 2 384 810, on place dans un autoclave en acier inoxydable de 100 l muni d'une agitation à ancre 11,545 kg de lauryllactame, 3,454 kg d'acide dodécanedioïque, 0,87 kg d'hexaméthylène diamine, 15 kg de PTMG de Mn 2000 et 2 l d'eau. Après plusieurs purges à l'azote, l'ensemble est chauffé sous agitation jusqu'à une température de 270°C sous pression de vapeur d'eau de 25 bars et maintenu dans ces conditions durant 8 h.

Après 90 mn de détente jusqu'à pression atmosphérique et mise sous balayage d'azote, on introduit 36,8 g d'une solution aqueuse d'acide phosphorique à 84 % et poursuit la polycondensation à 270°C sous courant d'azote à pression atmosphérique durant 9 h. On obtient un élastomère thermoplastique de viscosité inhérente 1,58 dl/g, de point de fusion 147°C et de dureté Shore D 34,6.

### Exemple 15 (COMPARATIF)

Selon le mode opératoire décrit dans le brevet FR 2 401 947, on introduit dans un autoclave en acier inoxydable de 100 l muni d'un agitateur à ancre 11,544 kg de lauryllactame, 3,454 kg d'acide dodécanedioïque, 0,87 kg d'hexaméthylène diamine et 2,9 l d'eau. Après plusieurs purges à l'azote, le milieu est chauffé jusqu'à 270°C sous pression autogène de 32 bars et maintenu 3 h dans ces conditions.

On diminue la pression jusqu'à la pression atmosphérique et place le milieu sous balayage d'azote puis introduit 15 kg de PTMG de Mn 2000. Le milieu maintenu à 250°C sous courant d'azote est agité pendant 3 h puis la pression est progressivement réduite jusqu'à 50 mbars et la température jusqu'à 240°C. On ajoute ensuite 65 cm3 d'une solution de Zr(OBu)₄ à 80 % dans le butanol. Après 10 mn, la pression est réduite jusqu'à 10 mbars. Après 15 mn dans ces conditions, on obtient un élastomère thermoplastique de couleur blanche, de viscosité inhérente 1,08 dl/g, de point de fusion 145°C et de dureté Shore D 34,3.

### Exemple 16

De manière similaire à l'exemple 13, on fait réagir 126 kg de lauryllactame et 37,8 kg d'acide dodécanedioïque à 290 °C pendant 2 h sous pression autogène après avoir purgé plusieurs fois le réacteur à l'azote. Après remise à pression atmosphérique, on introduit 82 kg de PTMG de Mn 1000 et laisse réagir le mélange à 240 °C pendant 3 h sous courant d'azote à pression atmosphérique.

Après homogénéisation sous pression autogène avec 9,54 kg d'hexaméthylène diamine pendant 1 h à 240 °C, le mélange réactionnel est transféré dans un réacteur en acier inoxydable muni d'une agitation à ancre puis détendu à pression atmosphérique en 1 h. 240 g d'une solution aqueuse d'acide phosphorique à 84 % sont introduits dans le milieu réactionnel qui est progressivement placé sous pression réduite de 4.10³ Pa. Après 4 h de polymérisation dans ces conditions, on obtient un élastomère thermoplastique de point de fusion 148°C, de viscosité inhérente 1,26 dl/g et de dureté Shore D 42,7.

### Exemple 17 (COMPARATIF)

De manière similaire à l'exemple 14, on place dans un autoclave en acier inoxydable de 100 l muni d'une agitation à ancre 15,394 kg de lauryllactame, 4,606 kg d'acide dodécanedioïque, 1,162 kg d'hexaméthylène diamine, 10 kg de PTMG de Mn 1000 et 1 l d'eau. Après plusieurs purges à l'azote, l'ensemble est chauffé sous agitation jusqu'à une température de 270 °C sous pression de vapeur d'eau de 15 bars et maintenu dans ces conditions durant 8 h. Après 25 mn de détente jusqu'à pression atmosphérique et mise sous balayage d'azote, on introduit 37,1 g d'une solution aqueuse d'acide phosphorique à 84 % et poursuit la polycondensation à 270 °C sous courant d'azote à pression atmosphérique durant 4 h. On obtient un élastomère thermoplastique de viscosité inhérente 1,58 dl/g, de température de fusion 146 °C et de dureté Shore D 47,3.

## Revendications

1. Polyéther bloc amides caractérisés en ce qu'ils répondent à la formule générale suivante : 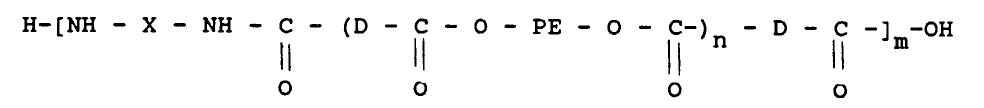 dans laquelle
. D représente le reste d'un oligamide diacide de Mn compris entre 300 et 3000 et de préférence entre 500 et 2000 et/ou le reste du limitateur diacide,
. PE représente le reste d'un polyétherdiol de Mn compris entre 200 et 5000 et de préférence entre 200 et 3000,
. X représente une chaîne hydrocarbonée, (cyclo) aliphatique, aromatique, linéaire ou ramifiée contenant de 4 à 20 atomes de carbone et de préférence de 6 à 15 atomes de carbone,
. n est un entier compris entre 1 et 4 et de préférence égal à 1,
. m est en moyenne compris entre 2 et 50 et de préférence entre 5 et 20.

2. Polyéther bloc amides selon la revendication 1 caractérisés en ce que les oligoamides diacides sont obtenus par polymérisation de lactames et/ou d'aminoacides, et éventuellement jusqu'à 50 % en poids d'un ou plusieurs diacides, et d'une ou plusieurs diamines en présence d'un limitateur de chaîne diacide ou leurs sels et dérivent de préférence de capolactame et/ou de dodécalactame.

3. Polyéther bloc amides son la revendication 1 ou 2, caractérisés en ce que les polyétherdiols sont choisis parmi le PEG et/ou le PPG et/ou le PTMG et/ou les copolymères statistiques et/ou séquencés d'éthylène glycol et/ou de propylène glycol et/ou de butylène glycol.

4. Polyéther bloc amides son l'une quelconque des revendications 1 à 3 caractérisés en ce que leur viscosité inhérente est comprise entre 0,6 et 2,5 dl/g, de préférence entre 0,8 et 2 et avantageusement entre 1 et 1,8.

5. Procédé de synthèse des polyéther bloc amides des revendications 1 à 4 en deux étapes, caractérisé en ce que :
a) on réalise les produits multiséquencés de formule 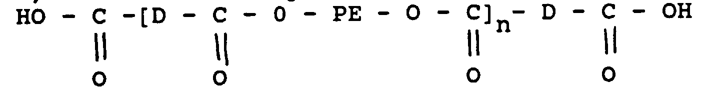 par polycondensation d'oligoamides diacides et de polyétherdiols ou des monomères d'oligoamide, du limitateur de chaîne diacide et de polyétherdiols par polycondensation interfaciale ou en solution et avantageusement par polycondensation à l'état fondu,
b) on fait réagir à l'état fondu les produits multiséquencés obtenus en a) avec des diamines de formule NH₂-X-NH₂ et de préférence la m-xylène diamine, le bis (amino-4 cyclohexyl) méthane, l'hexaméthylène diamine et/ou la dodécaméthylène diamine.

6. Procédé de synthèse selon la revendication 5 caractérisé en ce qu'on utilise un catalyseur pour l'une et/ou l'autre des étapes du procédé.

7. Utilisation des polyéther bloc amides des revendications 1 à 4, seuls ou en mélange avec d'autres polymères, pour la réalisation d'objets moulés ou extrudés, de films, de gaines, de matériaux composites.

## Patentansprüche

1. Polyetherblockamide, gekennzeichnet durch die allgemeine Formel 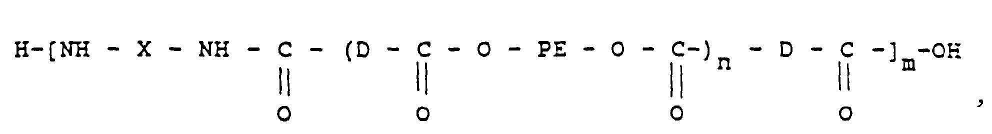 in der bedeuten:
. D den Rest eines Oligoamids mit zwei kettenendständigen Carboxygruppen und einem Zahlenmittel des Molekulargewichts Mn von 300 bis 3000 und vorzugsweise 500 bis 2000 und/oder den Rest des Kettenbegrenzungsmittels mit zwei endständigen Carboxygruppen,
. PE den Rest eines Polyetherdiols mit einem Zahlenmittel des Molekulargewichts Mn von 200 bis 5000 und vorzugsweise 200 bis 3000,
. X eine aliphatische, cycloaliphatische oder aromatische geradkettige oder verzweigte Kohlenwasserstoffkette mit 4 bis 20 Kohlenstoffatomen und vorzugsweise 6 bis 15 Kohlenstoffatomen,
. n eine ganze Zahl von 1 bis 4, die vorzugsweise gleich 1 ist,
und
. m einen Mittelwert, der im Bereich von 2 bis 50 und vorzugsweise im Bereich von 5 bis 20 liegt.

2. Polyetherblockamide nach Anspruch 1, dadurch gekennzeichnet, daß die Oligoamide mit zwei kettenendständigen Carboxygruppen durch Polymerisation von Lactamen und/oder Aminosäuren, ggfs. unter Verwendung von bis zu 50 Gew.-% einer oder mehrerer Dicarbonsäuren und eines oder mehrerer Diamine oder ihrer Salze, in Gegenwart eines Kettenbegrenzers mit zwei endständigen Carboxygruppen erhalten sind und sich vorzugsweise von Caprolactam und/oder Dodecalactam ableiten.

3. Polyetherblockamide nach Anspruch 1 oder 2, dadurch gekennzeichnet, daß die Polyetherdiole unter PEG und/oder PPG und/oder PTMG und/oder statistischen Copolymeren und/oder sequentiellen Copolymeren von Ethylenglykol und/oder Propylenglykol und/oder Butylenglykol ausgewählt sind.

4. Polyetherblockamide nach einem der Ansprüche 1 bis 3, dadurch gekennzeichnet, daß ihre inhärente Viskosität 0,6 bis 2,5 dl/g, vorzugsweise 0,8 bis 2 dl/g und vorteilhaft 1 bis 1,8 dl/g beträgt.

5. Verfahren zur Synthese der Polyetherblockamide nach den Ansprüchen 1 bis 4 in zwei Stufen,
gekennzeichnet durch
a) Herstellung von multisequentiellen Verbindungen der Formel 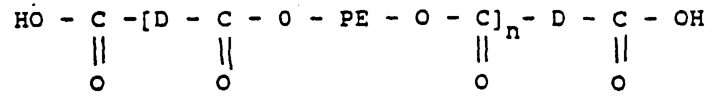 durch Polykondensation von Oligoamiden mit zwei kettenendständigen Carboxygruppen und Polyetherdiolen oder Oligoamid-Monomeren, eines Kettenbegrenzers mit zwei endständigen Carboxygruppen und Polyetherdiolen als Grenzflächenpolykondensation oder in Lösung und vorteilhaft durch Polykondensation in geschmolzenem Zustand
und
b) Umsetzung der in a) erhaltenen multisequentiellen Verbindungen in geschmolzenem Zustand mit Diaminen der Formel H₂N-X-NH₂ und vorzugsweise m-Xylylendiamin, Bis(4-aminocyclohexyl)methan, Hexamethylendiamin und/oder Dodecamethylendiamin.

6. Syntheseverfahren nach Anspruch 5, dadurch gekennzeichnet, daß in einer Stufe oder in beiden Stufen des Verfahrens ein Katalysator verwendet wird.

7. Verwendung der Polyetherblockamide nach den Ansprüchen 1 bis 4 allein oder im Gemisch mit anderen Polymeren zur Herstellung von gegossenen oder extrudierten Formkörpern, Folien, Ummantelungen und Kompositmaterialien.

## Claims

1. Block polyetheramides characterized in that they correspond to the following general formula: 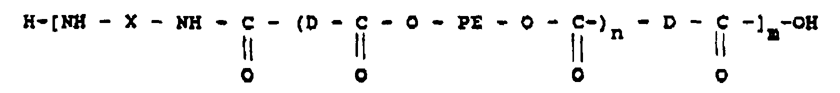 in which
- D represents the residue of a diacid oligamide having an Mn of between 300 and 3000 and preferably between 500 and 2000 and/or the residue of the diacid limiter,
- PE represents the residue of a polyetherdiol having an Mn of between 100 and 5000 and preferably between 200 and 3000,
- X represents a straight-chain or branched (cyclo)aliphatic or aromatic hydrocarbon chain containing from 4 to 20 carbon atoms and preferably from 6 to 15 carbon atoms,
- n is an integer between 1 and 4 and preferably equal to 1, and
- m is on average between 2 and 50 and preferably between 5 and 20.

2. Block polyetheramides according to claim 1, characterized in that the diacid oligamides are obtained by polymerization of lactams and/or amino acids, and optionally up to 50% by weight of one or more diacids, and of one or more diamines in the presence of a diacid chain limiter or their salts and are preferably derived from caprolactam and/or dodecalactam.

3. Block polyetheramides according to Claim 1 or 2, characterized in that the polyetherdiols are chosen from PEG and/or PPG and/or PTMG and/or the random and/or block copolymers of ethylene glycol and/or propylene glycol and/or butylene glycol.

4. Block polyetheramides according to any one of Claims 1 to 3, characterized in that their inherent viscosity is between 0.6 and 2.5 dl/g, preferably between 0.8 and 2 and advantageously between 1 and 1.8.

5. Process for the synthesis of the block polyetheramides of Claims 1 to 4 in two steps, characterized in that:
a) the multiblock products of formula 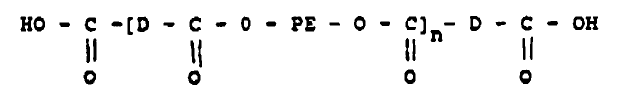 are prepared by polycondensation of diacid oligamides and polyetherdiols or oligamide monomers, diacid chain limiter and polyetherdiols by interfacial or solution polycondensation and advantageously by polycondensation in the molten state, and
b) the multiblock products obtained in a) are reacted in the molten state with diamines of formula NH₂-X-NH₂ and preferably m-xylenediamine, bis(4-aminocyclohexyl)-methane, hexamethylenediamine and/or dodecamethylenediamine.

6. Synthesis process according to Claim 5, characterized in that a catalyst is used for one and/or the other of the process steps.

7. Use of the block polyetheramides of Claims 1 to 4, on their own or as a mixture with other polymers, for the production of moulded or extruded articles, films, sheaths and composite materials.
